# EUROPEAN PATENT APPLICATION

(11) **EP 4 589 863 A1**
(43) Date of publication of application: **23.07.2025**
(21) Application number: 25152127.4
(22) Date of filing: 15.01.2025
(51) Int. Cl.: H04B 10/61, H04J 14/00

(54) **SPATIAL MULTIPLEXING OPTICAL RECEIVER, SPATIAL MULTIPLEXING OPTICAL TRANSMISSION SYSTEM, AND SPATIAL MULTIPLEXING OPTICAL RECEPTION METHOD**

(30) Priority: 17.01.2024 JP 2024005174
(71) Applicant: NEC Corporation, Tokyo 108-8001 (JP)
(72) Inventor: ARIKAWA, Manaba, Tokyo 108-8001 (JP)
(74) Representative: Vossius & Partner Patentanwälte Rechtsanwälte mbB

(57) **Abstract**

A spatial multiplexing optical receiver includes a plurality of coherent receivers configured to coherently receive each of spatially multiplexed and transmitted signals of a plurality of modes by using continuous wave light independent for each mode as local oscillator light, a plurality of frequency offset compensators configured to perform frequency offset compensation based on a correlation between a known training signal and a signal of each mode independently for each mode, for each of the coherently received signals of the plurality of modes, and a MIMO signal processing unit configured to perform MIMO signal processing on the signals of the plurality of modes subjected to the frequency offset compensation in the frequency offset compensator.

## Description

### INCORPORATION BY REFERENCE

This application is based upon and claims the benefit of priority from Japanese patent application No. 2024-005174, filed on January 17, 2024, the disclosure of which is incorporated herein in its entirety by reference.

### TECHNICAL FIELD

The present disclosure relates to a spatial multiplexing optical receiver, a spatial multiplexing optical transmission system, a spatial multiplexing optical reception method, and a computer-readable medium.

### BACKGROUND ART

Optical fiber communication using a single-mode fiber (SMF) cannot increase a signal-to-noise-ratio (SNR) of a signal indefinitely due to non-linear effects or fiber fuse phenomena. Therefore, it is known that there is a limit to increase a capacity of optical fiber communication. As a technique for breaking the limit of the increase in capacity, a spatial multiplexing transmission technology for multiplexing signals by utilizing a degree of freedom of space in an optical fiber has been actively studied in recent years.

Optical transmission systems using the spatial multiplexing transmission technology are roughly divided into two categories according to an amount of coupling between spatial channels. One is an uncoupled system with small coupling between spatial channels, and another is a coupled system. In the uncoupled system, existing optical transceivers for an SMF optical transmission system can be used as is. However, there is generally a trade-off between a density of the spatial channels and an amount of coupling between the spatial channels. Therefore, there is a limit to the number of spatial channels to be achieved by the uncoupled system.

Meanwhile, in the coupled system, coupling between spatial channels is allowed. The coupling between spatial channels is typically compensated by multi-input multi-output (MIMO) signal processing at a receiver side. The coupled system requires an optical receiver using MIMO signal processing, but achieves greater spatial channel density, i.e., greater transmission capacity per optical fiber. Herein, a coupled spatial multiplexing optical transmission system is described.

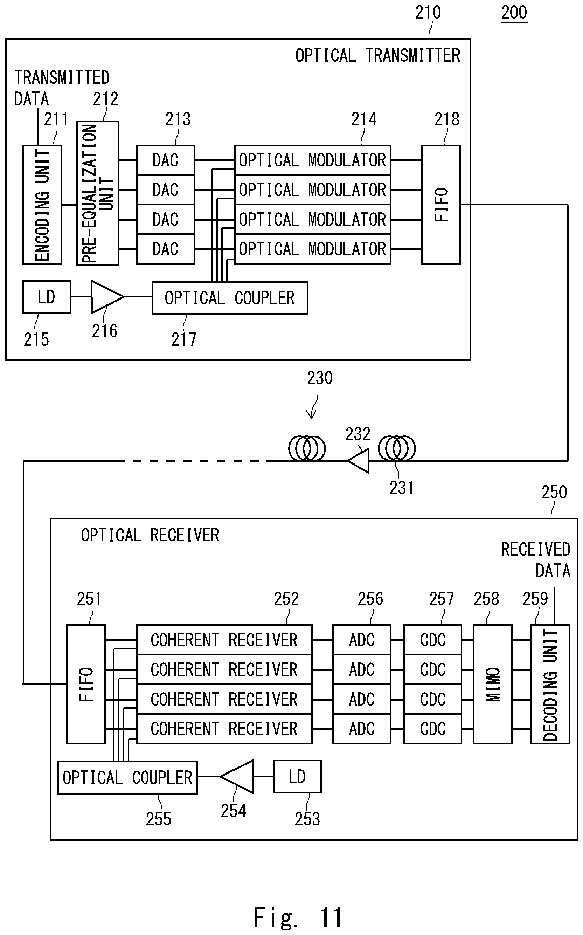

Fig. 11 illustrates a simplified configuration of a coupled spatial multiplexing optical transmission system described in Non-Patent Literature 1. Herein, as an example, a spatial multiplexing optical transmission system in which a two-core coupled multi-core fiber is used is explained. In such a spatial multiplexing optical transmission system, optical signals are transmitted in four modes of two polarizations and two spatial channels (cores).

An encoding unit 211 encodes transmitted data and converts the transmitted data into a signal having a predetermined modulation format. A pre-equalization unit 212 performs pre-equalization for compensating for distortion in a transmitter on the converted transmitted data. A digital-analog converter (DAC) 213 converts the pre-equalized data from a digital signal to an analog electrical signal. In a typical coherent optical transmission system, a modulation format with in-phase (I: in-phase) and quadrature-phase (Q: quadrature) components is employed. Therefore, the DAC 213 outputs two analog electrical signals being an I component and a Q component, for each mode. In Fig. 11, for the sake of simplicity, the signals of the I and Q components of each mode are represented by a single line.

A laser Diode (LD) 215 being a laser source emits continuous-wave (CW) light. An optical amplifier 216 amplifies the CW light. An optical coupler 217 outputs the amplified CW light to an optical modulator 214. For each mode, the optical modulator 214 modulates the CW light being input from the optical coupler 217 with an analog electrical signal being output from the DAC 213 and generates an optical signal. The mode-wise generated optical signals are sent to a multi-core fiber transmission path 230 by using fan-in fan-out (FIFOs) devices 218. The multi-core fiber transmission path 230 includes, for example, a multi-core optical fiber 231 being a coupled two-core fiber, and a two-core optical amplifier 232.

An optical receiver 250 receives an optical signal transmitted from an optical transmitter 210 via the multi-core fiber transmission path 230. In the optical receiver 250, a FIFO device 251 demultiplexes the received optical signal for each mode. The FIFO device 251 outputs the demultiplexed optical signal for each mode to a coherent receiver 252 to be disposed for each mode. An optical signal is typically demultiplexed for each spatial channel, i.e., core. In Fig. 11, for the sake of simplicity, an optical signal is demultiplexed for each core and for each polarization.

An LD 253 outputs CW light. An optical amplifier 254 amplifies the CW light. An optical coupler 255 outputs the amplified CW light to the coherent receivers 252. For each mode, the coherent receiver 252 coherently receives an optical signal demultiplexed by the FIFO device 251 by using the CW light being input from the optical coupler 217. An ADC 256 converts the coherently received signal into a digital signal.

The optical receiver 250 performs common static distortion compensation on the signal converted into a digital domain for each mode. Herein, chromatic dispersion compensation (CDC) is considered as static distortion compensation. A CDC filter 257 performs chromatic dispersion compensation on the coherently received signal.

A MIMO filter 258 performs MIMO signal processing for compensating for inter-mode coupling and inter-mode dispersion occurring in a transmission path for a signal in which static distortion is compensated for each mode. The inter-mode coupling in the transmission path varies in time. Therefore, the inter-mode coupling in the transmission path is compensated by a MIMO filter in which coefficients are adaptively controlled. A decoding unit 259 performs decoding processing including symbol determination and error correction on an output of the MIMO filter 258, and outputs received data from which transmitted data are restored.
[Non-Patent Literature 1] S. Randel et al., "6×56 Gb/s mode-division multiplexed transmission over 33-km few-mode fiber enabled by 6x6 MIMO equalization," Opt. Express 19 (17), 16697 (2011).
[Non-Patent Literature 2] K. Shibahara et al., "MIMO carrier phase recovery for carrier-asynchronous SDM-MIMO reception based on the extended Kalman filter," Opt. Express 29 (11), 17111 (2021).

Herein, the transmitter-side optical modulator 214 and the receiver-side coherent receiver 252 each require a certain single-polarization-state CW-light input as a light source for modulation and a local oscillator (LO) light for coherent reception. In addition, in a coupled spatial multiplexing optical transmission system that performs MIMO signal processing on the receiver side, in order to acquire good reception characteristics, both the optical modulator 214 on the transmitter side and the coherent receiver 252 on the receiver side require common CW light in all modes, as described in Non-Patent Literature 1. Further, each intensity of the CW light being input to the optical modulator 214 and the coherent receiver 252 is required to be of a certain value or higher.

In order to satisfy the above-described requirements, in the coupled spatial multiplexing optical transmission system 200, as illustrated in Fig. 11, CW light being output from one LD 215 is amplified by the optical amplifier 216 on the transmitter side, and the amplified CW light is branched by using the optical coupler 217. The branched CW light is supplied to each optical modulator 214. The optical amplifier 216 and the optical coupler 217 are required to be a polarization maintaining device in order to satisfy a requirement of the polarization state of the input to the optical modulator 214.

The same situation as above applies to LO light on the receiver side. Specifically, in the optical receiver 250, the optical amplifier 254 to be used for amplifying the CW light being output from the LD 253 and the optical coupler 255 to be used for branching the CW light are required to be a polarization-maintaining device. In general, polarization-maintaining optical amplifier and optical coupler are expensive devices.

Further, a branching loss in the optical couplers 217 and 255 increases as the number of spatial multiplexed channels increases. For this reason, in a case where the number of spatial multiplexed channels is increased, it may be necessary to amplify optical intensity by an optical amplifier with further polarization maintaining. As described above, in the coupled spatial multiplexing optical transmission system, an expensive polarization-maintaining optical device is required in order to supply common CW light in all modes both on the transmitter side and on the receiver side, and the optical system becomes complicated.

For the above-described problem, Non-Patent Literature 2 describes a configuration of a spatial multiplexing receiver in which CW light independent for each mode is used as LO light on the receiver side. In Non-Patent Literature 2, carrier phase compensation of an extended Kalman filter type is used in combination with MIMO signal processing in order to enable independent CW light for each mode to be used as LO light. However, this method has a problem that computational complexity of signal processing increases due to the carrier phase compensation of the extended Kalman filter type.

### SUMMARY

An example object of the present disclosure is to provide a spatial multiplexing optical receiver, a spatial multiplexing optical transmission system, a spatial multiplexing optical reception method, and a program that are capable of reducing a cost of a receiver in a spatial multiplexing optical transmission system.

In a first example aspect according to the present disclosure, a spatial multiplexing optical receiver includes a plurality of coherent receivers configured to coherently receive each of signals of a plurality of modes spatially multiplexed and transmitted, by using independent continuous wave light for each mode as local oscillator light, a plurality of frequency offset compensators configured to independently perform frequency offset compensation based on a correlation between a known training signal and a signal of each mode for each of the coherently received signals of the plurality of modes, and a MIMO signal processing unit configured to perform MIMO signal processing on signals of a plurality of modes subjected to the frequency offset compensation in each of the frequency offset compensators.

In a second example aspect according to the present disclosure, a spatial multiplexing optical transmission system includes a receiver including the above-described spatial multiplexing optical receiver, and a transmitter configured to transmit signals of the plurality of modes to the receiver via a transmission path.

In a third example aspect according to the present disclosure, a spatial multiplexing optical reception method includes coherently receiving each of signals of a plurality of modes spatially multiplexed and transmitted, by using independent continuous wave light for each mode as local oscillator light, performing frequency offset compensation based on a correlation between a known training signal and a signal of each mode independently for each mode, for each of the signals of the plurality of modes coherently received, and performing MIMO signal processing on the signals of the plurality of modes subjected to the frequency offset compensation.

In a fourth example aspect according to the present disclosure, a program is for causing a processor to execute processing of performing frequency offset compensation based on a correlation between a known training signal and a signal of each mode, independently for each mode, for each of signals of a plurality of modes spatially multiplexed and transmitted, the signals being coherently received by using continuous-wave light independent for each mode as local oscillator light, and performing MIMO signal processing on the signals of the plurality of modes subjected to the frequency offset compensation.

### BRIEF DESCRIPTION OF DRAWINGS

The above and other aspects, features, and advantages of the present disclosure will become more apparent from the following description of certain example embodiments when taken in conjunction with the accompanying drawings, in which:
Fig. 1 is a block diagram illustrating an example of a schematic configuration of a spatial multiplexing optical transmission system according to the present disclosure;
Fig. 2 is a block diagram illustrating an example of a schematic configuration of a spatial multiplexing optical receiver;
Fig. 3 is a block diagram illustrating a configuration example of a communication system according to the present disclosure;
Fig. 4 is a block diagram illustrating a configuration example of the spatial multiplexing optical receiver;
Fig. 5 is a block diagram illustrating a configuration example of a frequency offset compensator;
Fig. 6 is a block diagram illustrating another example of the configuration of the frequency offset compensator;
Fig. 7 is a flowchart illustrating an operation procedure of the frequency offset compensator;
Fig. 8 is a diagram illustrating a constellation of received signals in each mode after MIMO signal processing in a case where frequency offset compensation is not performed;
Fig. 9 is a diagram illustrating a constellation of received signals in each mode after MIMO signal processing in a case where frequency offset compensation is performed;
Fig. 10 is a block diagram illustrating a configuration example of a digital signal processing circuit; and
Fig. 11 is a block diagram illustrating a simplified configuration of a coupled spatial multiplexing optical transmission system described in Non-Patent Literature 1.

### EXAMPLE EMBODIMENTS

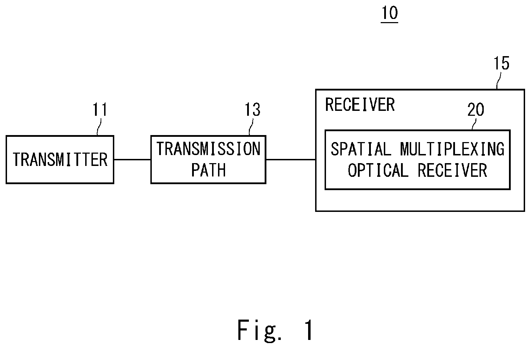

Prior to the description of the example embodiments of the present disclosure, an outline of the present disclosure is described. Fig. 1 illustrates an example of a schematic configuration of a spatial multiplexing optical transmission system according to the present disclosure. The spatial multiplexing optical transmission system 10 includes a transmitter 11 and a receiver 15. In the spatial multiplexing optical transmission system 10, the transmitter 11 and the receiver 15 are connected via a transmission path 13. The transmission path 13 includes, for example, a coupled multi-core fiber.

The transmitter 11 transmits signals of a plurality of modes to the receiver 15 via the transmission path 13. The receiver 15 includes a spatially multiplexed optical receiver 20. The spatial multiplexing optical receiver 20 receives signals of a plurality of modes that are spatially multiplexed and transmitted via the transmission path 13.

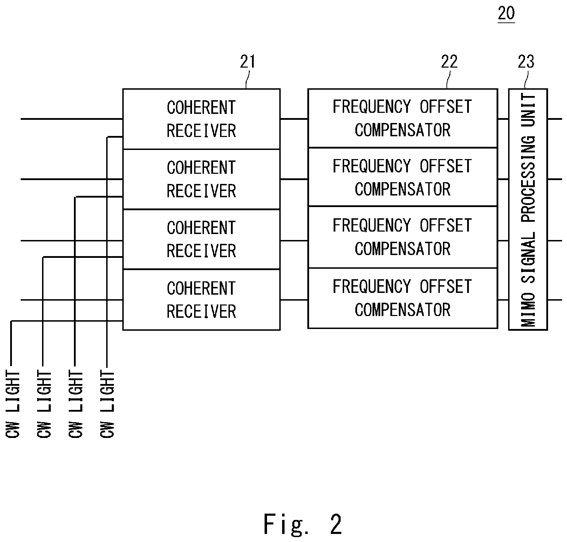

Fig. 2 illustrates an example of a schematic configuration of the spatial multiplexing optical receiver 20. The spatial multiplexing optical receiver 20 includes a plurality of coherent receivers 21, a frequency offset compensator 22, and a MIMO signal processing unit 23.

The coherent receiver 21 coherently receives each of the signals of the plurality of modes that is spatially multiplexed and transmitted, using CW light that is independent for each mode as LO light. The frequency offset compensator 22 performs, for each of the signals of the plurality of modes coherently received, frequency offset compensation based on the correlation between a known training signal and the signal of each mode independently for each mode. The MIMO signal processing unit 23 performs MIMO signal processing on the signals of the plurality of modes subjected to the frequency offset compensation.

In the present disclosure, the coherent receiver 21 uses independent CW light for each mode as LO light, and coherently receives signals of a plurality of modes spatially multiplexed and transmitted via the transmission paths. The frequency offset compensator 22 performs frequency offset compensation on the signals of the plurality of modes coherently received based on a correlation between a known training signal and a signal of each mode for each mode. In this way, the frequency offset compensator 22 can remove frequency offsets, which may vary from mode to mode, included in the coherently received signal. Therefore, in the present disclosure, expensive polarization maintaining devices are not required for the spatial multiplexing optical receiver 20, and the cost of the receiver used in the spatial multiplexing optical transmission system can be reduced.

Hereinafter, example embodiments of the present disclosure will be described in detail with reference to the drawings. Note that the following description and the drawings are omitted and simplified as appropriate for clarity of description. In the drawings, the same elements and the same elements are denoted by the same reference numerals, and redundant descriptions are omitted as necessary.

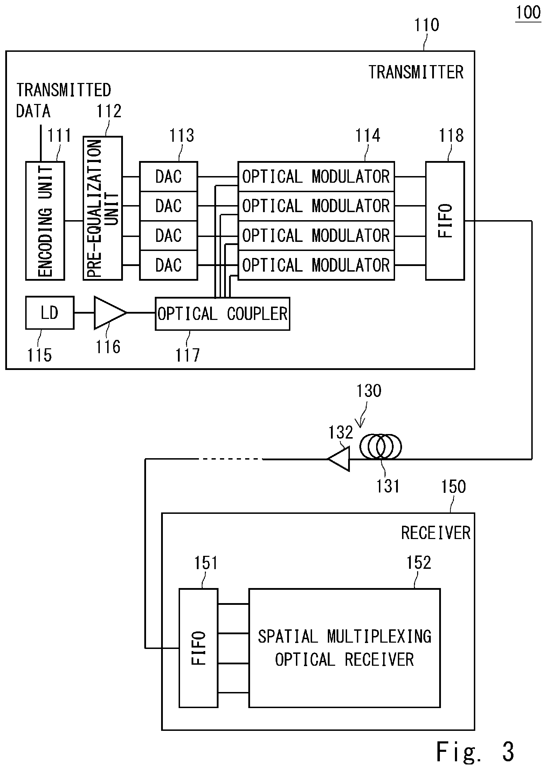

Fig. 3 illustrates a configuration example of a communication system according to the present disclosure. An example embodiment of the present disclosure will be described with reference to Fig. 3. In the present example embodiment, a communication system 100 is a coupled spatial multiplexing optical transmission system. The communication system 100 includes a transmitter 110, a transmission path 130, and a receiver 150. The communication system 100 corresponds to the spatial multiplexing optical transmission system 10 illustrated in Fig. 1. The transmitter 110 corresponds to the transmitter 11 illustrated in Fig. 1. The transmission path 130 corresponds to the transmission path 13 illustrated in Fig. 1. The receiver 150 corresponds to the receiver 15 illustrated in Fig. 1.

In the present example embodiment, it is assumed that the communication system 100 is a spatial multiplexing optical transmission system in which a two-core coupled multi-core fiber is used. Further, it is assumed that the communication system 100 is a spatial multiplexing optical transmission system in which Quadrature amplitude modulation (QAM) scheme is adopted as a modulation scheme of transmitted and received signals, and which performs coherent reception. In this case, in the communication system 100, an optical signal is transmitted in four modes, that is, two polarizations and two spatial channels (cores). Spatial multiplexing technology can be used in combination with wavelength multiplexing technology, but in the following, optical transmission systems of one wavelength channel are described for simplicity of explanation.

The transmitter 110 includes an encoding unit 111, a pre-equalization unit 112, a plurality of DACs 113, a plurality of optical modulators 114, LD 115, an optical amplifier 116, an optical coupler 117, and a FIFO device 118. The encoding unit 111 encodes the transmitted data and maps the encoded transmitted data to a QAM signal. The pre-equalization unit 112 compensates for distortion occurring in the optical signal in the transmitter 110.

Each DAC 113 converts a signal of each mode output from the pre-equalization unit 112 from a signal in the digital domain to an electrical signal in the analog domain. In this example embodiment, the transmitter 110 generates signals of I and Q components for each of the four modes. That is, a total of eight signals are generated at the transmitter 110. In Fig. 3, the signals of the I component and the signals of the Q component of each mode are collectively represented as a single line.

The LD 115 outputs CW light. The optical amplifier 116 amplifies the CW light output from the LD 115 to a predetermined level. The optical coupler 117 branches the CW light amplified by the optical amplifier 116, and inputs the branched CW light to each of the plurality of optical modulators 114. A polarization-maintaining optical amplifier is used for the optical amplifier 116. A polarization-maintaining optical coupler is used for the optical coupler 117.

Each of the optical modulators 114 modulates the CW light input from the optical coupler 117 using two electrical signals, i.e., an I component and a Q component, output from the DAC 113, and generates an optical signal of each mode. In a case where a polarization multiplexing type optical modulator is used for the optical modulator 114, a total of four electrical signals, i.e., an I component and a Q component of the X-polarization and an I component and a Q component of the Y-polarization, are input to the optical modulator 114 for each spatial channel. In this case, the optical modulator 114 generates a polarization-multiplexed optical signal.

The FIFO device 118 is a FIFO device used as fan-in. An optical signal corresponding to a spatial channel, in this case, an optical signal corresponding to each core, is input to the FIFO device 118. The FIFO device 118 outputs an optical signal corresponding to each core to a corresponding core of the transmission path 130 that is a multi-core fiber transmission path. The configuration and operation of the transmitter 110 may be similar to the configuration and operation of the optical transmitter 210 illustrated in Fig. 11.

The transmission path 130 is a multi-core fiber transmission path, and includes a coupled two-core fiber 131 and a two-core optical amplifier 132. The transmission path 130 has a set of the coupled two-core fiber 131 and the two-core optical amplifier 132 connected in cascade with each other, for example, per span.

The receiver 150 includes a FIFO device 151 and a spatial multiplexing optical receiver 152. At the receiver 150, the FIFO device 151 is a FIFO device used as fan-out. The FIFO device 151 demultiplexes the optical signal transmitted through the transmission path 130 for each mode. The FIFO device 151 outputs the demultiplexed optical signal to the spatial multiplexing optical receiver 152. The spatial multiplexing optical receiver 152 corresponds to the spatial multiplexing optical receiver 20 illustrated in Fig. 1.

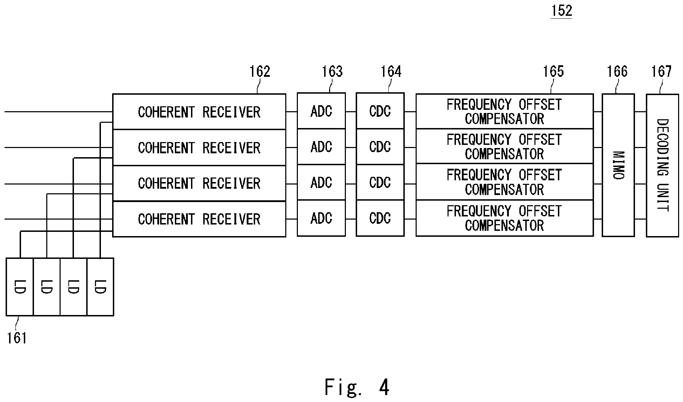

Fig. 4 illustrates a configuration example of the spatial multiplexing optical receiver 152. The spatial multiplexing optical receiver 152 includes a plurality of LDs 161, a plurality of coherent receivers 162, a plurality of ADCs 163, a plurality of CDC filters 164, a plurality of frequency offset compensators 165, a MIMO filter 166, and a decoding unit 167.

The plurality of LDs 161 provides CW light independent for each mode to the coherent receiver 162. Each of the plurality of LDs 161 is arranged independently for each mode. Each of the plurality of coherent receivers 162 is supplied with the CW light output from the LD 161 independently for each mode or each spatial channel as the LO light. Each coherent receiver 162 coherently receives a signal demultiplexed for each mode or each spatial channel by the FIFO device 151 using the CW light output from the corresponding LD 161. In the present example embodiment, in the spatial multiplexing optical receiver 152, the LD 161 that is independent for each mode or each spatial channel is used, and unlike the transmitter 110, a polarization-maintaining optical amplifier and a polarization-maintaining optical coupler are not required. The coherent receiver 162 corresponds to the coherent receiver 21 illustrated in Fig. 2.

Each ADC 163 converts a coherently received signal from an analog signal to a digital signal per mode or per spatial channel. Each of the plurality of CDC filters 164 is configured as a filter that performs static distortion compensation for each mode. Each CDC filter 164 performs chromatic dispersion compensation, which is static distortion compensation, for each mode or for each spatial channel on the signal converted into a digital signal. The spatial multiplexing optical receiver 152 may have a matched filter or a filter to compensate for incompleteness of the receiver device in place of or in addition to the CDC filter 164.

The frequency offset compensator 165 performs frequency offset compensation for a signal subjected to static distortion compensation for each mode or for each spatial channel, for each mode or for each spatial channel. In the present example embodiment, the frequency offset compensator 165 performs frequency offset compensation on the received signal before MIMO signal processing, independently for each mode or for each spatial channel, based on correlation with a known training signal.

For example, the frequency offset compensator 165 provides, for each of the plurality of frequency offset amounts, a phase rotation corresponding to each frequency offset amount to the coherently received signal. For example, the frequency offset compensator 165 applies a phase rotation corresponding to each frequency offset amount to the coherently received signal while changing the frequency offset amount in a predetermined sweep range. The frequency offset compensator 165 calculates the cross-correlation between the signal given the phase rotation and the known training signal, and detects intensity of the peak of the cross-correlation.

The frequency offset compensator 165 determines the frequency offset compensation amount, based on the detected intensity of the peak of the cross-correlation for each of the plurality of frequency offset amounts. For example, the frequency offset compensator 165 compares the detected intensities of the peaks for each of the plurality of frequency offset amounts, and determines a frequency offset compensation amount, based on the comparison result. The frequency offset compensator 165 determines, for example, the frequency offset amount having the largest peak intensity among the plurality of frequency offset amounts as the frequency offset compensation amount. The frequency offset compensator 165 corresponds to the frequency offset compensator 22 illustrated in Fig. 2.

The MIMO filter 166 performs MIMO signal processing for compensating for inter-mode coupling and inter-mode dispersion occurring in a transmission path on a signal subjected to frequency offset compensation for each mode or for each spatial channel. The MIMO filter 166 is an adaptive filter in which coefficients are adaptively controlled. The MIMO signal processing performed by the MIMO filter 166 includes, for example, a phase-locked loop type carrier phase compensation. The MIMO filter 166 corresponds to the MIMO signal processing unit 23 illustrated in Fig. 2.

The decoding unit 167 performs decoding processing on the signal output from the MIMO filter 166. The decoding process includes, for example, symbol determination processing and error correction processing. The decoding unit 167 generates received data from which the transmitted data has been recovered by the decoding processing.

In the coupled spatial multiplexing optical transmission system illustrated in Fig. 3, CW light common to all modes is used as a light source for modulation on the transmitter side. On the receiver side, on the other hand, CW light that is independent for each mode or each spatial channel is used as LO light. Therefore, the coherently received signal for each mode includes a frequency offset that reflects the instantaneous frequency of each independent CW light on the receiver side. In the present example embodiment, the frequency offset compensator 165 performs frequency offset compensation to remove a different frequency offset for each mode or for each spatial channel before the MIMO signal processing. In this way, the effect of using the LD 161 that is independent for each mode on the receiver side is mitigated.

Note that the signal before the MIMO signal processing has an influence of inter-mode coupling and inter-mode dispersion occurring in the transmission path. For this reason, the frequency offset compensation performed before the MIMO signal processing is required to be robust to the effects of inter-mode coupling and inter-mode dispersion.

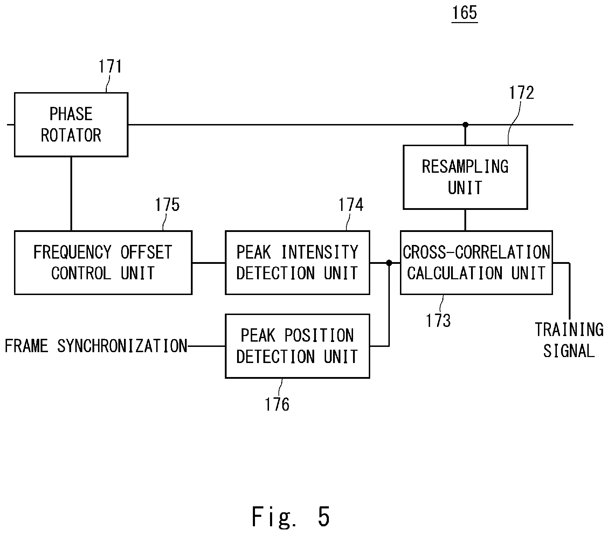

Fig. 5 illustrates a configuration example of the frequency offset compensator 165. The frequency offset compensator 165 includes a phase rotator 171, a resampling unit 172, a cross-correlation calculation unit 173, a peak intensity detection unit 174, a frequency offset control unit 175, and a peak position detection unit 176. The configuration illustrated in Fig. 5 corresponds to the configuration of the frequency offset compensator 165 corresponding to one mode or spatial channel.

The phase rotator 171 receives a static distortion-compensated signal output from the CDC filter 164. The phase rotator 171 rotates the phase of the input signal in accordance with the frequency offset amount output from the frequency offset control unit 175. The resampling unit 172 resamples the output signal of the phase rotator 171 into a signal having the same sampling rate as a known training signal. Typically, the training signal is a transmitted symbol sequence, and the sampling rate of the training signal matches the symbol rate. The cross-correlation calculation unit 173 calculates a cross-correlation between the resampled signal and a known training signal. The peak intensity detection unit 174 detects intensity of the peak with respect to the calculated cross-correlation.

The frequency offset control unit 175 changes the frequency offset amount with an appropriate resolution over a predetermined range. In other words, the frequency offset control unit 175 sweeps the frequency offset amount in a range of a predetermined frequency offset amount. The peak intensity detection unit 174 calculates intensity of the cross-correlation peak for each of the swept frequency offset amounts. In a case where the frequency offset amount is swept, the frequency offset amount from which the peak of the cross-correlation of the maximum intensity is obtained is a frequency offset compensation amount which is plausible with respect to the signal of the corresponding mode. The frequency offset control unit 175 outputs, to the phase rotator 171, a frequency offset amount in which the peak of the maximum intensity of the cross-correlation is obtained, and causes the phase rotator 171 to perform the frequency offset compensation.

After performing the frequency offset compensation, the peak position detection unit 176 detects the time position of the peak, that is, the peak position with respect to the cross-correlation calculated by the cross-correlation calculation unit 173. The detected peak position includes information of a time lag between the received signal and the transmitted training signal. The detected peak position information is used for frame synchronization. The peak position detection unit 176 inputs information on the detected peak position to a frame synchronization unit (not illustrated in Fig. 3). As a result, frame synchronization required for data-aided MIMO-signal-processing is performed. Frame synchronization is achieved as an adjustment of the delay to the frequency-offset-compensated signal or an adjustment of the delay to the trained signal in data-aided MIMO-signal processes.

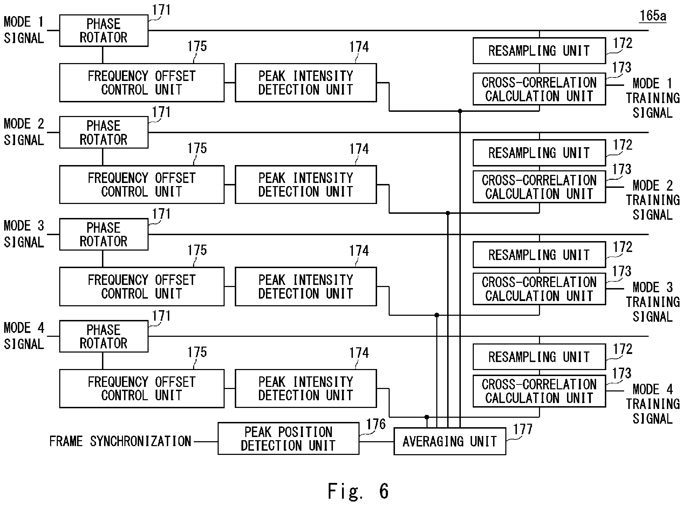

Fig. 6 illustrates another example of a configuration of a frequency offset compensator. In this example, the frequency offset compensator 165a includes a phase rotator 171, a resampling unit 172, a cross-correlation calculation unit 173, a peak intensity detection unit 174, a frequency offset control unit 175, and a peak position detection unit 176 for each mode. The frequency offset compensator 165a includes a peak position detection unit 176 and an averaging unit 177 common to a plurality of modes. In the frequency offset compensator 165a illustrated in Fig. 6, the operation of compensating for the frequency offset in each mode may be the same as the operation of the frequency offset compensator 165 illustrated in Fig. 5.

In the frequency offset compensator 165a, after the frequency offset compensation amount is determined in each mode, the averaging unit 177 averages the cross-correlation calculated by the cross-correlation calculation unit 173 in each mode. Peak position detection unit 176 detects the position of the peak in the cross-correlation averaged by averaging unit 177. By doing so, the peak position detection unit 176 can reduce the influence of noise at the time of peak position detection, and can detect the position of the peak with high accuracy.

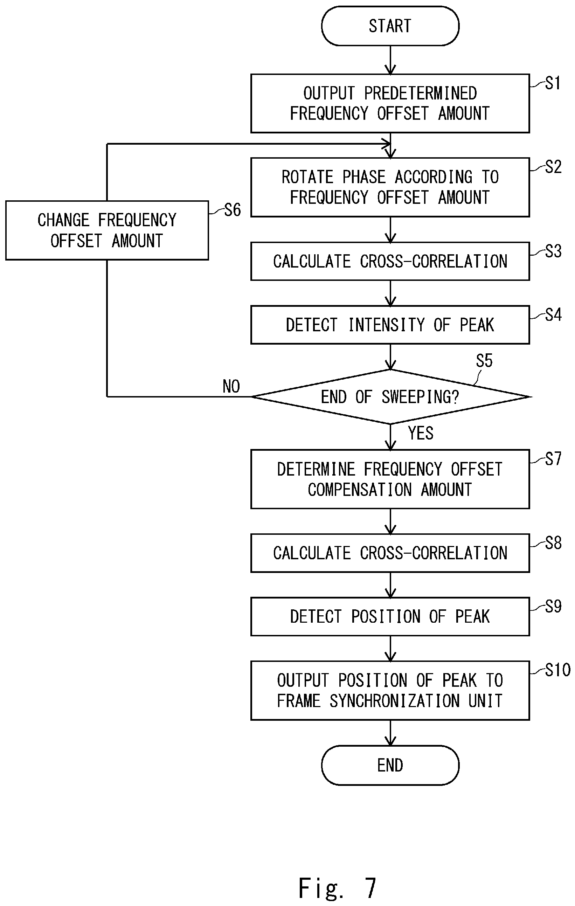

Next, the operation procedure will be described. Fig. 7 illustrates an operation procedure of the frequency offset compensator 165. The operation procedure of the frequency offset compensator 165 constitutes a part of the spatial multiplexing optical reception method. Each of the plurality of coherent receivers 162 coherently receives a signal of each mode using CW light that is independent for each mode. The frequency offset compensator 165 receives signals of respective modes coherently received by the coherent receiver 162 via the ADC 163 and the CDC filter 164.

In the frequency offset compensator 165, the frequency offset control unit 175 outputs a predetermined frequency offset amount to the phase rotator 171 (step S1). The phase rotator 171 rotates the phase of the input signal in accordance with the frequency offset amount output from the frequency offset control unit 175 (step S2).

The resampling unit 172 resamples the output signal of the phase rotator 171 into a signal having the same sampling rate as a known training signal. The cross-correlation calculation unit 173 calculates a cross-correlation between the resampled signal and a known training signal (step S3). The peak intensity detection unit 174 detects intensity of the peak with respect to the calculated cross-correlation (step S4).

The frequency offset control unit 175 determines whether the sweeping of the frequency offset amount has ended (step S5). In a case where it is determined that the sweeping of the frequency offset amount has not been completed, the frequency offset control unit 175 changes the frequency offset amount to be output to the phase rotator 171 (step S6). Thereafter, the processing returns to step S2, and the phase rotator 171 rotates the phase of the input signal in accordance with the frequency offset amount output from the frequency offset control unit 175.

Steps S2 to S6 are repeatedly performed until it is determined in step S5 that the sweeping of the frequency offset amount has been completed. In other words, the frequency offset compensator 165 repeatedly performs the phase rotation, the calculation of the cross-correlation, and the detection of the peak intensity in the sweep range of the predetermined frequency offset amount.

In a case where it is determined in step S5 that the sweeping of the frequency offset amount is completed, the frequency offset control unit 175 determines the frequency offset compensation amount based on the intensity of the peak detected by the peak intensity detection unit 174 (step S7). In step S7, the frequency offset control unit 175 determines, for example, a frequency offset amount in which a peak of the maximum intensity of the cross-correlation is obtained as the frequency offset compensation amount. The frequency offset control unit 175 outputs a frequency offset amount indicating the determined frequency offset compensation amount to the phase rotator 171. The phase rotator 171 outputs the signal whose frequency offset is compensated to the MIMO filter 166.

The cross-correlation calculation unit 173 calculates a cross-correlation between the signal of which the frequency offset has been compensated for and the training signal (step S8). After performing the frequency offset compensation, the peak position detection unit 176 detects the position of the peak with respect to the cross-correlation calculated by the cross-correlation calculation unit 173 (step S9). The peak position detection unit 176 outputs the detected position of the peak to a frame synchronization unit (not illustrated) (step S10).

In the present example embodiment, in the spatial multiplexing optical receiver 152, the coherent receiver 162 coherently receives signals of a plurality of modes spatially multiplexed using independent CW light for each mode as LO light. In this case, the coherently received signal for each mode includes a frequency offset reflecting the instantaneous frequency of the CW light independent for each mode. The frequency offset compensator 165 compensates for the frequency offset based on the correlation between the coherently received signal and the known training signal, independently for each mode, before MIMO signal processing is performed in the MIMO filter 166. By doing so, the frequency offset compensator 165 can remove a different frequency offset for each mode or for each spatial channel included in the coherently received signal, and a good reception characteristic can be obtained.

In the present example embodiment, since an independent LD 161 can be used for each mode, it is not necessary to amplify the CW light output from one laser light source by an optical amplifier and distribute the CW light to all the coherent receivers 162 using an optical coupler. In a case where CW light output from one laser light source is distributed to a plurality of coherent receivers 162, polarization-maintaining devices are used for the optical amplifier and the optical coupler, respectively. In general, polarization-maintaining optical amplifiers and optical couplers are expensive. In the present example embodiment, good reception characteristics can be obtained without requiring an expensive polarization maintaining device. Therefore, the present example embodiment can reduce the cost of a receiver used in a spatial multiplexing optical transmission system.

The present inventor has performed a simulation and verified the operation of the spatial multiplexing optical receiver 152. In the simulation, a transmission over a span of 100-km coupled two-core fiber is considered. The transmitted signal is a signal obtained by polarization multiplexing and spatial multiplexing 32-Gbaud Quadrature phase shift keying (QPSK) signals. The chromatic dispersion of the coupled 2-core fiber is set to 17 ps/nm/km, and the mode dispersion is set to 5 ps/√km. The nonlinear effects in the fiber are ignored. After the fiber transmission, additive white Gaussian noise (AWGN) is added to make the received OSNR 30dB/0.1nm.

The light source on the transmitter side is set to a line width of 100 kHz, and a common light source is used in all modes. For the light source on the receiver side, the line width is 100 kHz, and a light source having independent phase noise and frequency offset for each mode is used. The frequency offset between the transmitter-side light source and the receiver-side light source is 100 MHz, and a frequency offset of 10 MHz is further given between the light sources corresponding to the two cores on the receiver-side. The sampling rate of the receiving ADC is two-fold oversampling. MIMO-signal-processing is performed using an adaptive MIMO finite impulse response (FIR) filter and the filter length of the FIR filter is half-symbol-spaced 101 taps. The filter-coefficients are first converged by data-aided least-mean square (LMS)-algorithm and then switched to decision-directed LMS to evaluate.

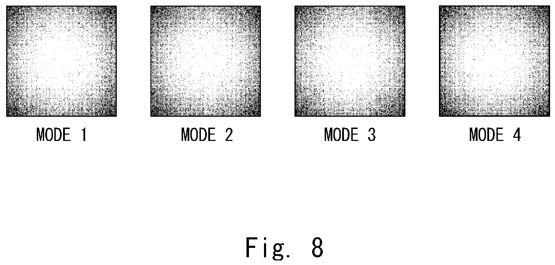

First, in order to confirm the problem of simply using the independent light source as the LO light at the receiver side, the received signal of each mode after the MIMO signal processing in the case where the frequency offset compensation is not performed by the frequency offset compensator 165 is evaluated. Fig. 8 illustrates the constellation of the received signals in each mode after MIMO signal processing in a case where frequency offset compensation is not performed by the frequency offset compensator 165. In Fig. 8, mode 1 corresponds to the X-polarization of core 1 and mode 2 corresponds to the Y-polarization of core 1. The mode 3 corresponds to the X-polarization of the core 2, and the mode 4 corresponds to the Y-polarization of the core 2. In the constellation illustrated in Fig. 8, the transmitted QPSK signal cannot be confirmed at all, and it can be seen that demodulation has failed.

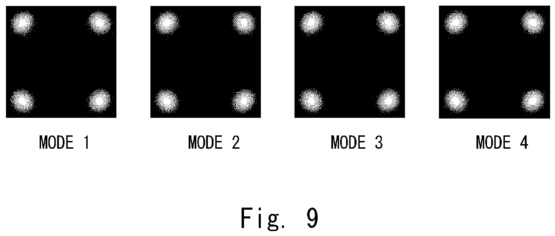

Then, the received signal of each mode after the MIMO signal processing is evaluated in the case where the signal processing including the frequency offset compensation for each mode is performed. Fig. 9 illustrates the constellation of the received signal in each mode after the MIMO signal processing in the case where the frequency offset compensation is performed by the frequency offset compensator 165. Referring to Fig. 9, although the phase noise of the light source and the influence of AWGN remain in the received signal, the symbol point of the transmitted QPSK can be well confirmed, and it is confirmed that the spatial multiplexing optical receiver is functioning.

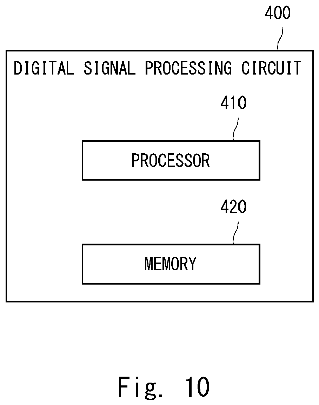

In the above example embodiment, the CDC filter 164, the frequency offset compensator 165, the MIMO filter 166, and the decoding unit 167 may each be configured using any digital signal processing circuit. Fig. 10 illustrates a configuration example of a digital signal processing circuit. The digital signal processing circuit 400 is configured as a circuit including one or more processors 410 and one or more memories 420. In the digital signal processing circuit 400, one or more processors 410 read programs stored in one or more memories 420 and execute processing on the read programs. Accordingly, at least a part of the functions of the CDC filter 164, the frequency offset compensator 165, the MIMO filter 166, or the decoding unit 167 can be achieved.

The program includes instructions (or software codes) that, after loaded into a computer, cause the computer to perform one or more of the functions described in the example embodiments. The program may be stored in a non-transitory computer readable medium or a tangible storage medium. By way of example, and not a limitation, non-transitory computer readable media or tangible storage media can include a random-access memory (RAM), a read-only memory (ROM), a flash memory, a solid-state drive (SSD) or other types of memory technologies, a Compact Disc (CD), a digital versatile disc (DVD), a Blu-ray disc or other types of optical disc storage, and magnetic cassettes, magnetic tape, magnetic disk storage or other types of magnetic storage devices. The program may be transmitted on a transitory computer readable medium or a communication medium. By way of example, and not a limitation, transitory computer readable media or communication media can include electrical, optical, acoustical, or other forms of propagated signals.

In the above example embodiment, an example has been described in which the spatial multiplexing optical receiver 152 is used in a spatial multiplexing optical transmission system in which a coupled multi-core fiber is used. However, the present disclosure is not limited thereto. The spatial multiplexing optical receiver 152 is not limited to an optical fiber transmission system, and may be used as a receiver that performs spatial multiplexing or diversity reception in an optical spatial communication system such as an inter-satellite communication system or a satellite-to ground communication system.

While the present disclosure has been particularly illustrated and described with reference to example embodiments thereof, the present disclosure is not limited to these example embodiments. It will be understood by those of ordinary skill in the art that various changes in form and details may be made therein without departing from the spirit and scope of the present disclosure as defined by the claims. And each example embodiment can be appropriately combined with at least one of example embodiments.

Each of the drawings or figures is merely an example to illustrate one or more example embodiments. Each figure may not be associated with only one particular example embodiment, but may be associated with one or more other example embodiments. As those of ordinary skill in the art will understand, various features or steps described with reference to any one of the figures can be combined with features or steps illustrated in one or more other figures, for example, to produce example embodiments that are not explicitly illustrated or described. Not all of the features or steps illustrated in any one of the figures to describe an example embodiment are necessarily essential, and some features or steps may be omitted. The order of the steps described in any of the figures may be changed as appropriate.

An example advantage according to the above-described example embodiments is that the spatial multiplexing optical receiver, the spatial multiplexing optical transmission system, the spatial multiplexing optical reception method, and the program according to the present disclosure make it possible to reduce a cost of the receiver in the spatial multiplexing optical transmission system.

The whole or part of the example embodiments disclosed above can be described as, but not limited to, the following supplementary notes.

### [Supplementary note 1]

A spatial multiplexing optical receiver including:
a plurality of coherent receivers configured to coherently receive each of signals of a plurality of modes spatially multiplexed and transmitted, by using independent continuous-wave light for each mode as local oscillator light;
a plurality of frequency offset compensators configured to perform, independently for each mode, frequency offset compensation based on a correlation between a known training signal and a signal of each mode for each of the signals of the plurality of modes being coherently received; and
a multi-input multi-output (MIMO) signal processing unit configured to perform MIMO signal processing on the signals of the plurality of modes subjected to the frequency offset compensation in the frequency offset compensator.

### [Supplementary note 2]

The spatial multiplexing optical receiver according to Supplementary note 1, in which the frequency offset compensator applies a phase rotation associated with each frequency offset amount to the coherently received signal for each of a plurality of frequency offset amounts, calculates a cross-correlation between the signal provided with the phase rotation and the training signal, and determines a frequency offset compensation amount, based on intensity of a peak of the cross-correlation.

### [Supplementary note 3]

The spatial multiplexing optical receiver according to Supplementary note 2, in which the frequency offset compensator applies a phase rotation associated with each frequency offset amount to the coherently received signal while changing the frequency offset amount in a predetermined sweep range.

### [Supplementary note 4]

The spatial multiplexing optical receiver according to Supplementary note 2 or 3, in which the frequency offset compensator compares intensity of the peaks detected for each of the plurality of frequency offset amounts, and determines the frequency offset compensation amount, based on a comparison result of intensity of the detected peaks.

### [Supplementary note 5]

The spatial multiplexing optical receiver according to any one of Supplementary notes 2 to 4, in which the frequency offset compensator determines, as the frequency offset compensation amount, a frequency offset amount having a largest intensity of the peak among the plurality of frequency offset amounts.

### [Supplementary note 6]

The spatial multiplexing optical receiver according to any one of Supplementary notes 2 to 5, in which, the frequency offset compensator includes, associated with each of the plurality of modes, a frequency offset control unit configured to control the frequency offset amount, a phase rotator configured to provide a phase rotation associated with the frequency offset amount being output from the frequency offset control unit with respect to the coherently received signal, a cross-correlation calculation unit configured to calculate a cross-correlation between a signal being output from the phase rotator and the training signal, and a peak intensity detection unit configured to detect intensity of a peak in the calculated cross-correlation.

### [Supplementary note 7]

The spatial multiplexing optical receiver according to Supplementary note 6, in which
the frequency offset control unit outputs a plurality of frequency offset amounts to the phase rotator,
the peak intensity detection unit detects intensity of a peak in the calculated cross-correlation for each of the plurality of frequency offset amounts, and
the frequency offset control unit determines a frequency offset compensation amount, based on the intensity of the peak detected for each of the plurality of frequency offset amounts, and outputs a frequency offset amount determined as the frequency offset compensation amount to the phase rotator.

### [Supplementary note 8]

The spatial multiplexing optical receiver according to Supplementary note 6 or 7, in which the frequency offset compensator further includes a peak position detection unit configured to detect a peak position with respect to the cross-correlation calculated by the cross-correlation calculation unit after the frequency offset compensation amount is determined.

### [Supplementary note 9]

The spatial multiplexing optical receiver according to Supplementary note 8, in which the frequency offset compensator further includes an averaging unit configured to average the cross-correlation calculated in each of the plurality of modes, and the peak position detecting unit detects a position of a peak in the averaged cross-correlation.

### [Supplementary note 10]

The spatial multiplexing optical receiver according to any one of Supplementary notes 8 and 9, in which the position of the peak detected by the peak position detection unit is used for frame synchronization.

### [Supplementary note 11]

The spatial multiplexing optical receiver according to any one of Supplementary notes 1 to 10, in which the continuous-wave light independent for each mode is supplied to the coherent receiver from a laser light source to be disposed independently for each mode.

### [Supplementary note 12]

The spatial multiplexing optical receiver according to any one of Supplementary notes 1 to 11, further including a filter configured to compensate for static distortion included in the coherently received signals, for each of the coherently received signals of the plurality of modes on a front stage of the frequency offset compensator.

### [Supplementary note 13]

The spatial multiplexing optical receiver according to Supplementary note 12, in which the filter compensating for static distortion includes a filter configured to perform chromatic dispersion compensation.

### [Supplementary note 14]

A spatial multiplexing optical transmission system including:
a receiver including the spatial multiplexing optical receiver according to any one of Supplementary notes 1 to 13; and
a transmitter configured to transmit the signals of the plurality of modes to the receiver via a transmission path.

### [Supplementary note 15]

A spatially multiplexed optical reception method including:
coherently receiving each of signals of a plurality of modes spatially multiplexed and transmitted, by using independent continuous-wave light for each mode as local oscillator light;
performing frequency offset compensation based on a correlation between a known training signal and a signal of each mode independently for each mode, for each of the coherently received signals of the plurality of modes; and
performing multi-input multi-output (MIMO) signal processing on the signals of the plurality of modes subjected to the frequency offset compensation.

### [Supplementary note 16]

A program for causing a processor to execute processing of:
performing frequency offset compensation based on a correlation between a known training signal and a signal of each mode independently for each mode, for each of signals of a plurality of modes spatially multiplexed and transmitted, the signals being coherently received by using independent continuous-wave light for each mode as local oscillator light; and
performing multi-input multi-output (MIMO) signal processing on the signals of the plurality of modes subjected to the frequency offset compensation.

Some or all of elements specified in Supplementary Notes 2 to 13 dependent on Supplementary Note 1 may also be dependent on Supplementary Note 15 and Supplementary Note 16 in dependency similar to that of Supplementary Notes 2 to 13 on Supplementary Note 1. Some or all of elements specified in any of Supplementary Notes may be applied to various types of hardware, software, and recording means for recording software, systems, and methods.

## Claims

1. A spatial multiplexing optical receiver including:
a plurality of coherent receivers for coherently receiving each of signals of a plurality of modes spatially multiplexed and transmitted, by using independent continuous-wave light for each mode as local oscillator light;
a plurality of frequency offset compensators for performing, independently for each mode, frequency offset compensation based on a correlation between a known training signal and a signal of each mode for each of the signals of the plurality of modes being coherently received; and
a multi-input multi-output (MIMO) signal processing unit for performing MIMO signal processing on the signals of the plurality of modes subjected to the frequency offset compensation in the frequency offset compensator.

2. The spatial multiplexing optical receiver according to claim 1, in which the frequency offset compensator applies a phase rotation associated with each frequency offset amount to the coherently received signal for each of a plurality of frequency offset amounts, calculates a cross-correlation between the signal provided with the phase rotation and the training signal, and determines a frequency offset compensation amount, based on intensity of a peak of the cross-correlation.

3. The spatial multiplexing optical receiver according to claim 2, in which the frequency offset compensator applies a phase rotation associated with each frequency offset amount to the coherently received signal while changing the frequency offset amount in a predetermined sweep range.

4. The spatial multiplexing optical receiver according to claim 2 or 3, in which the frequency offset compensator compares intensity of the peaks detected for each of the plurality of frequency offset amounts, and determines the frequency offset compensation amount, based on a comparison result of intensity of the detected peaks.

5. The spatial multiplexing optical receiver according to any one of claims 2 to 4, in which the frequency offset compensator determines, as the frequency offset compensation amount, a frequency offset amount having a largest intensity of the peak among the plurality of frequency offset amounts.

6. The spatial multiplexing optical receiver according to any one of claims 2 to 5, in which, the frequency offset compensator includes, associated with each of the plurality of modes, a frequency offset control unit for controlling the frequency offset amount, a phase rotator for providing a phase rotation associated with the frequency offset amount being output from the frequency offset control unit with respect to the coherently received signal, a cross-correlation calculation unit for calculating a cross-correlation between a signal being output from the phase rotator and the training signal, and a peak intensity detection unit for detecting intensity of a peak in the calculated cross-correlation.

7. The spatial multiplexing optical receiver according to claim 6, in which
the frequency offset control unit outputs a plurality of frequency offset amounts to the phase rotator,
the peak intensity detection unit detects intensity of a peak in the calculated cross-correlation for each of the plurality of frequency offset amounts, and
the frequency offset control unit determines a frequency offset compensation amount, based on the intensity of the peak detected for each of the plurality of frequency offset amounts, and outputs a frequency offset amount determined as the frequency offset compensation amount to the phase rotator.

8. The spatial multiplexing optical receiver according to claim 6 or 7, in which the frequency offset compensator further includes a peak position detection unit for detecting a peak position with respect to the cross-correlation calculated by the cross-correlation calculation unit after the frequency offset compensation amount is determined.

9. The spatial multiplexing optical receiver according to claim 8, in which the frequency offset compensator further includes an averaging unit for averaging the cross-correlation calculated in each of the plurality of modes, and the peak position detecting unit detects a position of a peak in the averaged cross-correlation.

10. The spatial multiplexing optical receiver according to any one of claims 1 to 9, in which the continuous-wave light independent for each mode is supplied to the coherent receiver from a laser light source to be disposed independently for each mode.

11. The spatial multiplexing optical receiver according to any one of claims 1 to 10, further including a filter for compensating for static distortion included in the coherently received signals, for each of the coherently received signals of the plurality of modes on a front stage of the frequency offset compensator.

12. The spatial multiplexing optical receiver according to claim 11, in which the filter compensating for static distortion includes a filter for performing chromatic dispersion compensation.

13. A spatial multiplexing optical transmission system including:
a receiver including the spatial multiplexing optical receiver according to any one of claims 1 to 12; and
a transmitter configured to transmit the signals of the plurality of modes to the receiver via a transmission path.

14. A spatially multiplexed optical reception method including:
coherently receiving each of signals of a plurality of modes spatially multiplexed and transmitted, by using independent continuous-wave light for each mode as local oscillator light;
performing frequency offset compensation based on a correlation between a known training signal and a signal of each mode independently for each mode, for each of the coherently received signals of the plurality of modes; and
performing multi-input multi-output (MIMO) signal processing on the signals of the plurality of modes subjected to the frequency offset compensation.

15. A program for causing a processor to execute processing of:
performing frequency offset compensation based on a correlation between a known training signal and a signal of each mode independently for each mode, for each of signals of a plurality of modes spatially multiplexed and transmitted, the signals being coherently received by using independent continuous-wave light for each mode as local oscillator light; and
performing multi-input multi-output (MIMO) signal processing on the signals of the plurality of modes subjected to the frequency offset compensation.
